# EUROPEAN PATENT APPLICATION

(11) **EP 2 003 042 A2**
(43) Date of publication of application: **17.12.2008**
(21) Application number: 08425241.0
(22) Date of filing: 10.04.2008
(51) Int. Cl.: B62D 7/18

(54) **Steering device**

(30) Priority: 16.04.2007 IT MI20070765
(71) Applicant: Franco Repellini, Cesare, 26100 Cremona (IT)
(72) Inventor: Franco Repellini, Cesare, 26100 Cremona (IT)

(57) **Abstract**

Steering device comprising an axle (1) suitable for supporting the weight of a vehicle located on top of it, a sleeve (3) firmly connected to one end of this axle (1), where this sleeve (3) has an upper mouth-piece (4) and a lower mouth-piece (5), a coupling element (6) for the hub (7) of a wheel (8) located at the outside of this sleeve (3), a shaft (2) fitted in a rotary manner inside of the sleeve (3) and firmly connected to this coupling element (6) by means of a supporting element (9), where this steering device includes furthermore an alleviation element (10) firmly connected to the coupling element (6) and constrained in a rotary manner directly to the upper mouth-piece (4) of the sleeve (3), so to enable transmitting of the bending moment from the alleviation element (10) directly to the sleeve (3).

## Description

This invention refers to a steering device according to the preamble of the main claim.

At the state of art, the steering device of a vehicle includes an axle suitable for supporting the weight of a vehicle located on top of it. At each of both ends of the axle, at least one wheel is located. The vehicle may be connected to the axle by means of a crown gear. In this case, the entire axle is able to turn around for steering as referred to the vehicle. Alternatively, the axle is fixed as to the vehicle, and for steering the hub, on which each of the wheels is located, rotates around a vertical axis. The wheels are therefore able to steer in an independent manner although they are co-ordinated as to their movements so to steer the whole vehicle. In this second case, the axle has a sleeve at its end, and the hub of the wheel is linked by means of a coupling element and a supporting element to a shaft, which enters into the inside of the sleeve and is constrained to the sleeve in a rotary manner. There may be different forms of realisation, but in all cases the wheel hub is firmly linked to a shaft which enters into the sleeve of the axle, and the connection between the axle and the wheel passes only through the rotary fit between the shaft and the sleeve, which is normally realised by using taper roller bearings.

If the weight of the vehicle is considerable and the steering is obtained by a crown gear, this gear must be quite sturdy and therefore costly in order to support in a rotary manner the part of the weight of the vehicle which is burdened on it.

If the wheels can be steered in an independent manner and the axle is fixed, the bending moment determined by the weight of the vehicle which lies on the axle and by the reaction of the ground on the wheel, causes a deflection of the wheel due to deformation of the elements with which it is connected to the axle (coupling element, supporting element, shaft). This deformation may be such either to prevent steering or to enable it only with considerable difficulties and to submit the entire steering device to a stress by which it may be subject to quick wear.

The purpose of this invention therefore is to realise a steering device that allows the overcoming of the aforesaid troubles; especially a purpose is to realise a steering device that also with heavy loads limits the deflection of the wheels, thus allowing a better operation of the steering system and reduced wear.

These purposes are reached by a steering device, whose invention features are put into evidence in the claims.

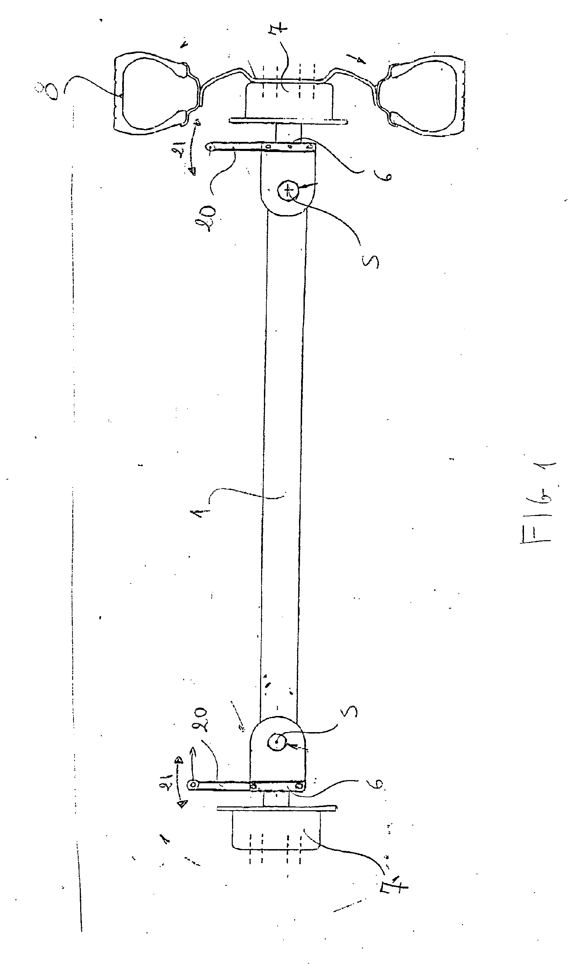

The invention can be better understood by the details of the following description, which is given only as an example, but not limited to the execution form which is shown in the enclosed drawings, where:
fig. 1 shows a view from the top of a steering device according to the invention;
fig. 2 shows a front view, partially in cross-section, of the steering device according to the invention;
fig. 3 shows an enlargement of the cross-section of the steering device.
With reference to figure 1, it is apparent from this that the steering device with independent wheels includes an axle 1 which is suitable for supporting the weight of a vehicle (not shown) located on top of it, that is connected to the axle 1 directly or through dampers. The ends of the axle are provided with wheels 8 (only one of the two wheels has been drawn for reasons of simplicity) that are constrained in a rotary manner to the hub 7. Each of the hubs 7 is firmly connected to a coupling element 6 that can turn around a vertical axis S at the end of the axle 1. The rotation of the coupling elements around the vertical axes S takes place by acting on the respective arms 20, as shown by arrows 21.

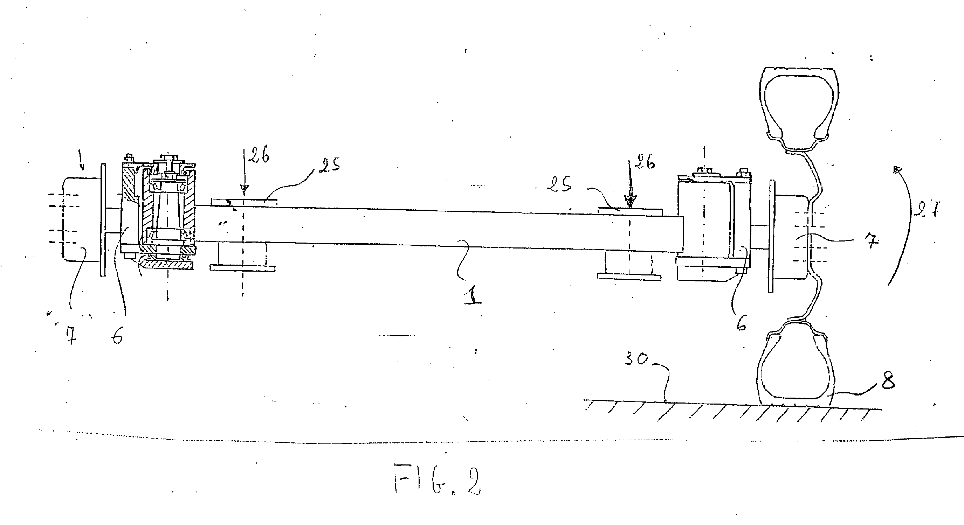

With reference to figure 2, it is apparent from this that the wheel 8 is in contact with the roadway 30. The weight of the vehicle is burdened on the axle 1 at the supporting points 25, as shown by arrows 26. The bending moment - generated by the vehicle weight which acts on the axle 1 and the reaction of the roadway, which is developed by the supporting point of the wheel 8 on the roadway 30 - tends to cause a deflection of the wheel, as shown by arrow 27. Obviously the steering device is symmetric to the vertical axis passing through the centre of the axle 1.

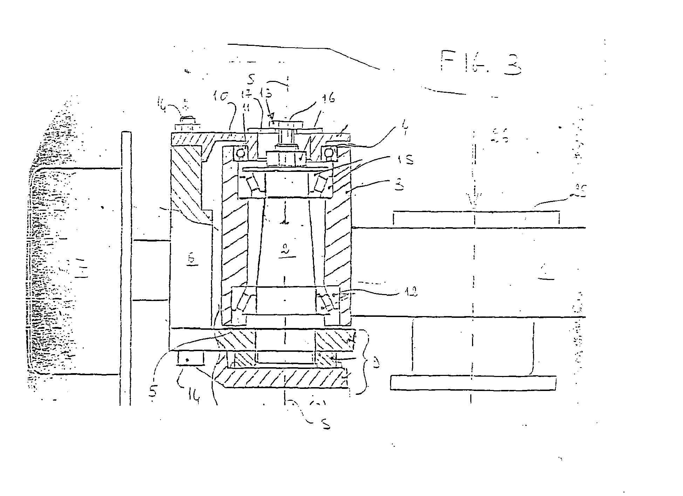

With reference to figure 3, it is apparent from this that at each end of this axle 1 there is a sleeve 3 which has an upper mouth-piece 4 and a lower mouth-piece 5. The coupling element 6 of the hub 7 of wheel 8 is located on the outside of this sleeve 3. A shaft 2, coupled in a rotary manner inside of the sleeve 3, by means of two taper roller bearings 12 and 15 is firmly connected to this coupling element 6 by means of a supporting element 9 which connects to the coupling element 6 the end of shaft 2 that protrudes from the lower mouth-piece 5 of sleeve 3. In a conventional steering device, this supporting element 9 must be particularly sturdy as the vehicle weight is alleviated by means of shaft 2 on this supporting element 9 by submitting it to a considerable bending moment. The figure shows the steering device according to the invention as a modification of a conventional steering device, for which reason the supporting element 9 proves to be very sturdy and to consist of three overlaid parts. The steering device according to the invention comprises furthermore an alleviation element 10, which is firmly connected to the coupling element 6 and constrained in a rotary manner directly to the upper mouth-piece 4 of the sleeve 3 by means of the first radial bearing 11. The alleviation element 10 is suitable to transmit the bending moment generated by the coupling element 6 directly to the sleeve 3. In this manner the supporting element 9, the coupling element 6 and the alleviation element 10, mutually united, substantially form a "C" shape, where the lower arm of the "C" (supporting element 9) is firmly connected to the shaft 2, which is constrained in a rotary manner by the second set of taper bearings 12 and 15 to the sleeve 3. The upper arm of the "C" (alleviation element 10) is on the other hand constrained in a rotary manner directly to the upper mouth-piece 4 of the sleeve 3. The alleviation element 10, as it cannot alleviate the bending moment to the shaft 2, but is connected in a manner to alleviate it to the sleeve 3, which is decisively more sturdy than the shaft 2, prevents or at least reduces considerably the bending of the supporting element 9 and of the wheel 8.

In order to facilitate disassembling of the steering device, the supporting element 9, the coupling element 6 and the alleviation element 10 are connected by two lock-screws 14 (the prospective in fig. 3 shows only one) which cross the coupling element 6 that is located between the supporting element 9 and the alleviation element 10. In order to always facilitate disassembling of the steering device, the supporting element 9 includes the locking means to the shaft 2.

The steering device has a safety element 13 that includes a bolt 16 and a washer 17. The bolt 16 is located along the axis of shaft 2 and is screwed on the end of shaft 2 next to the upper mouth-piece 4 of the sleeve 3. The washer 17 lies on the alleviation element 10. This safety element 13 substantially is not able to transmit bending moments and its purpose is to avoid that an unforeseen jolting of the vehicle, for example due to a hump or an irregularity on the roadway when travelling at high speed, may displace the first radial bearing 11 located between the alleviation element 10 and the upper mouth-piece 4 of the sleeve 3. The bolt 16 does not push the washer 17 downwards, but together with the washer 17 acts only as a safety device against any lifting of the alleviation element and of the first bearing 11.

By lying directly on the mouth-piece of the sleeve 3, the alleviation element 10 co-acts together with the supporting element 9 in the reaction to the bending moment generated by the parallel forces directed to the opposite side acting along the axis of the shaft 2 and along the coupling element 6. In this manner the bending action on shaft 2, which represents a moment of inertia of the cross-section being considerably lower than that of sleeve 3, proves to be very low, and consequently also its deformation is lower.

On the contrary, the moment of inertia of the cross section formed by the supporting element 9 and the alleviation element 10 proves to be considerable even if the cross sections of both elements are small, as these cross sections are quite distant one from the other.

This allows a more efficient reaction to the bending moment with a smaller deformation. The wheel 8 therefore can turn around the vertical axis S with a minimum deflection although it is subject to high loads.

This allows not only a better operation of the steering system and minor wear at high loads, but also saving of money as the dimensions of the supporting element 9 can be reduced.

## Claims

1. Steering device comprising an axle (1) suitable for supporting the weight of a vehicle located on top of it, a sleeve (3) firmly connected to one end of this axle (1), where this sleeve (3) has an upper mouth-piece (4) and a lower mouth-piece (5), a coupling element (6) for the hub (7) of a wheel (8) located at the outside of this sleeve (3), a shaft (2) fitted in a rotary manner inside of the sleeve (3) and firmly connected to this coupling element (6) by means of a supporting element (9), which connects firmly to the coupling element (6) the end of shaft (2) which protrudes from the lower mouth-piece (5) of the sleeve (3), **wherein** it includes an alleviation element (10) firmly connected to the coupling element (6) and constrained in a rotary manner directly to the upper mouth-piece (4) of the sleeve (3), so to enable transmitting of the bending moment from the alleviation element (10) directly to the sleeve (3).

2. Steering device according to claim 1, wherein it includes at least a first bearing (11) located between the alleviation element (10) and the upper mouth-piece (4) of the sleeve (3).

3. Steering device according to the previous claim, wherein this first bearing (11) is of the radial type.

4. Steering device according to claim 1, wherein it includes at least a second bearing (12) located between the shaft (2) and the sleeve (3) for their mutual rotary fitting.

5. Steering device according to the previous claim, wherein this second bearing (12) is of the taper roller type.

6. Steering device according to the previous claim, wherein it includes two taper roller bearings (12, 15) located between the shaft (2) and the sleeve (3).

7. Steering device according to claim 1, wherein it includes a safety element (13) located between the end of the shaft (2) next to the upper mouth-piece (4) of the sleeve (3) and the alleviation element (10), where this safety element (13) is substantially not able to transmit any bending moments.

8. Steering device according to claim 7, wherein this safety element (13) includes a bolt (16) located along the axis of shaft (2) and a washer (17) which lies on the alleviation element (10).

9. Steering device according to claim 1, wherein the supporting element (9), the coupling element (6) and the alleviation element (10), mutually united, substantially form a "C" shape and are connected by at least one lock-screw (14) which crosses the coupling element (6).

10. Steering device according to claim 1, wherein this supporting element (9) includes the locking means of the shaft (2).
